# EUROPEAN PATENT APPLICATION

(11) **EP 1 308 091 A2**
(43) Date of publication of application: **07.05.2003**
(21) Application number: 02079558.9
(22) Date of filing: 01.11.2002
(51) Int. Cl.: A01K 45/00

(54) **Transport container**

(30) Priority: 02.11.2001 NL 1019282
(71) Applicant: Systemate Group B.V., 3281 AC Numansdorp (NL)
(72) Inventor: Hazenbroek, Jacobus Eliza, 3286 LH Klaaswaal (NL); Hobbel, Arend, 3281 CP Numansdorp (NL)
(74) Representative: Ferguson, Alexander

(57) **Abstract**

Container for transporting poultry, comprising a frame and a number of tray-shaped decks for the poultry, the container having a loading side, where the poultry can be placed on the decks, as well as an opposite rear side and lateral sides, whereby at least the decks above the lowermost deck have a bottom, which as a whole is hinged to the frame by means of a hinge connection or pivot connection situated at a distance from the rear side.

## Description

The invention relates to a container for transporting poultry.

Such containers are used for the transport of poultry from the farm to a slaughterhouse. Examples of them can be found in Dutch patent applications 80.05146, 80.05345 and 89.00470 and Spanish utility model 88.01607. In these cases there are a number of decks or trays, the bottom of a deck also defining the lid or ceiling for the deck situated underneath. The upper deck is shielded by an upper lid or upper wall. The decks are held in a firm frame that is movable.

To facilitate the loading of poultry on the several decks it is suggested in Dutch patent applications 80.05146 and 80.05345 to hinge the tray-shaped decks to the frame at the side of the frame opposite the loading side, the decks at the loading side being detachably connectable to each other, and the decks being jointly or in a selective upper group being capable of being turned upwards by means of a lifting and lowering means, such as a jack, provided in the container, for providing a loading opening to the deck situated below it. After a deck has been filled the entire group of upwardly turned decks has to be lowered by means of the jack, its lowermost deck has to be detached from it, and then the group decreased by one deck has to be turned upwards again for loading the just detached deck in the frame. This is rather laborious and requires a lot of forces. The jack necessary to that end renders the container rather costly.

For facilitating loading Dutch patent application 89.00470 suggests an embodiment in which the bottoms are retractable in themselves, away from the loading side. In another embodiment use is made of bottoms which have a fixed portion and a portion that can be turned upwards, connected to each other by means of hinges. The higher the deck is situated, the more towards the rear the hinges for the consecutive desks are situated. The upper wall is entirely rigid and can also be turned upwards about a hinge situated at the rear side of the frame.

In the container shown in Spanish utility model 88.01607, bottoms are provided having several internal hinges, so that they can be folded down onto themselves.

It is an object of the invention to provide a container for transport of life poultry, with an improved loading possibility.

It is a further object of the invention to provide a container for transport of life poultry that is easy to operate when increasing the loading access and closing it off again.

It is a further object of the invention to provide a container for transport of life poultry which has a simple structure.

From one aspect the invention to that end provides a container for transporting poultry, comprising a frame and a number of tray-shaped decks for the poultry, the container having a loading side, where the poultry can be placed on the decks, as well as an opposite rear side and lateral sides, whereby at least the decks above the lowermost deck have a bottom, which as a whole is hinged to the frame by means of a hinge connection or pivot connection situated at a distance from the rear side.

Thus the bottoms can the tilted to an upwardly turned position in which access is given to the deck situated underneath it. The tilting of the bottoms takes place about a centre line situated between their end edges, as a result of which a part of the weight of the bottoms is utilised for the tilting motion and the force necessary to that end is being limited. The force necessary for keeping the bottoms in the upwardly turned position of the bottoms and tilting the bottoms back is also limited.

Preferably the bottoms hinge like a rigid unity, as a result of which the tilting motion is facilitated and the structure remains simple.

Preferably, the distance of hinge connection to the rear side of the frame is smaller than its distance to the loading side, so that a relatively large loading passage can be provided.

When the distance of the hinge connection to the rear side of the frame is in the order of magnitude of the height of the decks, a larger loading passage can be provided having a large achievable surface for the deck to be loaded, preserving the aforementioned advantages of the position of the hinge.

For turning the bottoms to a maximum upwardly turned position it is preferred that the distance of the hinge connection to the rear side of the frame is smaller than the height of the decks.

The structure, the assembly and the operation are facilitated when the hinge connections for the bottoms are vertically aligned. Use can moreover be made of one type of bottom for all decks.

In an advantageous embodiment the bottoms at the loading side can be provided with front walls for shielding the deck at the loading side, the front walls being fixed to the respective bottoms. Provisions for folding down the front walls can be dispensed with. The front walls may serve as well-accessible engagement means, for manually tilting the bottoms.

In a further embodiment the upper deck is covered by a lid, which as a whole is hinged to the frame by means of lid hinge connection or pivot connection situated at a distance from the rear side. Thus, just like the bottoms, the lid is tiltable for providing a large loading passage and allowing a well upwardly turned position of the decks situated underneath it. For simplicity of structure it is preferred here that the lid hinge connection is vertically aligned with the other hinge connections.

Other than is the case with the bottoms, the lid can be provided with a portion that can be turned at the loading side, so that in the upwardly turned position, the lid edge to be engaged at the loading side does not extend too high for the person having to operate the lid.

Preferably the container is provided with means for retaining the bottoms and possibly the lid in an upwardly turned position, which retaining means comprise first and second retaining members cooperating with each other, which are provided on the frame and on the bottom or lid, respectively. The provision for retaining the bottoms and the lid in upwardly turned position can thus be kept simple.

Preferably the first retaining members each time extend in the swing path of the second retaining members and the second retaining members are adapted for snapping along the first retaining members during the tilting motion of the bottom or lid.

The first retaining members can in a simple way comprise supports attached to the lateral sides of the frame.

The second retaining members may in a simple way form a stop for support on the first retaining member in question. The stop preferably is situated at the side of the hinge connection of the respective bottom or lid facing the loading side, so that the upper surface of the bottom can remain free from protrusions. Preferably, the stop is made of deformable material, such as rubber, that is sufficiently rigid for keeping the bottom in the upwardly turned position when supported on the support.

Preferably the rear side forms a discharge side, so that the container can be used according to a through loading/discharge system.

The rigidity and the manageability of the bottoms is enhanced when the bottoms are provided with girders and transverse bars.

From another aspect the invention provides a container for transporting poultry, comprising a frame and a number of tray-shaped decks for the poultry, the container having a loading side, where the poultry can be placed on the decks, as well as an opposite rear side and lateral sides, whereby the decks are upwardly shielded by lid walls, such as the bottoms of the decks situated above it or an upper lid, the lid walls as a whole being hinged to the frame by means of hinge connections or pivot connections situated at a distance from the rear side.

The invention will be elucidated on the basis of an exemplary embodiment shown in the attached drawings, in which:
Figure 1 shows a view from the loading side of a possible embodiment of a container 1 according to the invention;
Figure 2 shows a side view of the container of figure 1 during loading;
Figure 2A schematically shows the container of figure 2, during a next stage of loading; and
Figure 3 shows a detail of the container of figures 1 and 2, with a view of the bottom of a deck of the container.

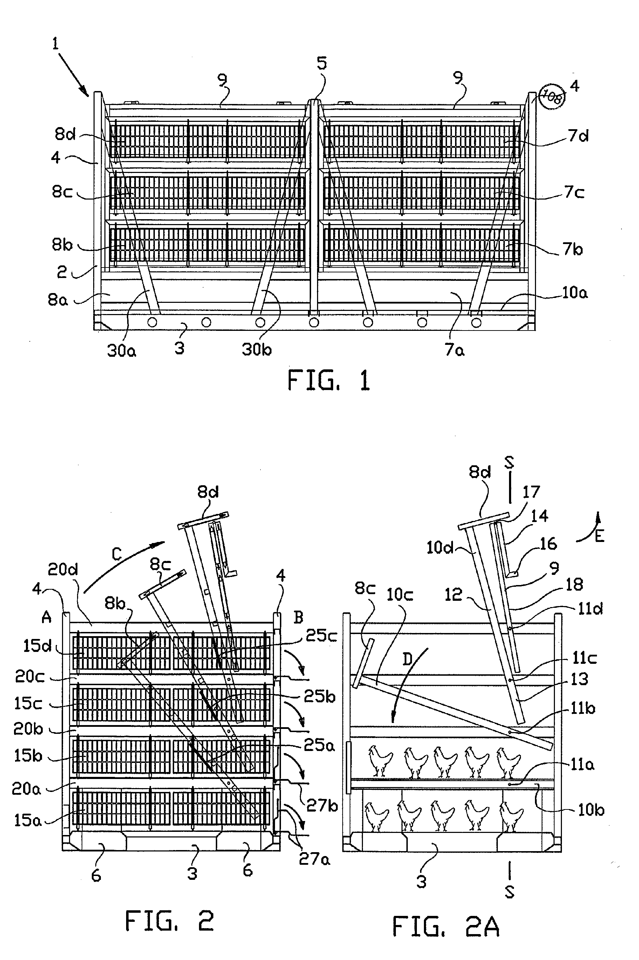

In figure 1 the container 1 is shown, having a robust stainless steel frame 2, having a bottom 3 and uprights 4 at the four corners, as well as centre uprights 5 at the loading side A and at the discharge side B (see figure 2). Between the corner uprights 4 and the bottom 3 struts 30a, 30b are attached, to enhance the rigidity of the frame 2, at the loading side A.

As can be seen in figure 2 recesses 6 have been provided in the bottom 3 for the teeth of a fork-lift truck.

In figure 1 it is indicated that the container 1 has two pairs of decks 7a, 7b, 7c and 7d, intended for transport of poultry, particularly chicken. The lowermost deck 7a is bounded at the loading side A by a permanent partition 8a. At the sides said deck 7a is bounded by open, grid-shaped permanent walls 15a (it will be understood that these walls have been arranged at both longitudinal ends and in the centre wall between the centre uprights 5), and at the discharge side B by wall 27a which can be folded down for discharging and which is also grid-shaped. The deck 7a is downwardly bounded by the bottom 10a, which is a part of the bottom 3, and is upwardly bounded by the bottom 10b of deck 7b.

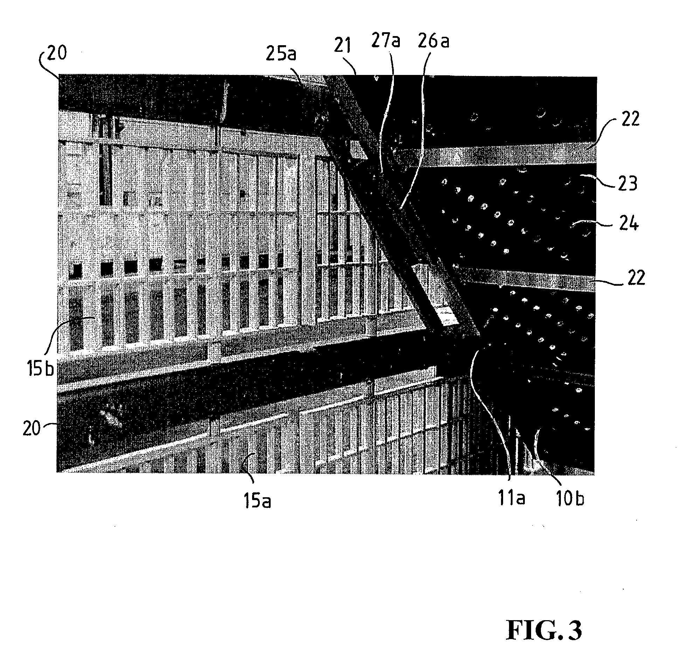

The deck 7b thus has bottom 10b, which as can be seen in figure 3, has been built up from a rectangular frame having longitudinal girders 21 and transverse beams 22. On the girders 21 and transverse beams 22 a bottom plate 23 provided with holes 24 has been attached.

At the sides the deck 7b is bounded by open, grid-shaped permanent walls 15b, corresponding to walls 15a. At the discharge side B a grid-shaped wall 27b, which can be folded down for discharging, has been provided. At the loading side A the deck 7b is bounded by open, grid-shaped wall 8b, which is fixed to the bottom 10b and which is at an angle of 90° thereto. Bottom 10b and front wall 8b thus form one firm unity.

As can be seen in the figures 2, 2A and 3 the bottom 10b is attached in a swivelling manner by means of hinge 11a at a distance from the discharge side B to the rails 20a of the frame 2.

The decks 7c and 7d are built up in a similar way, that means also with bottoms 10c and 10d, which at the location of hinges 11b, 11c, respectively, are attached in a swivelling manner to corresponding rails 20b and 20c.

The upper deck 7d is upwardly bounded by a grid-shaped lid 9, which as a rigid portion 18, which at the location of the hinges 11d is attached in a swivelling manner to the upper rails 20e of the frame 2. At the location of hinge 17, the lid 9 is parted into the rigid portion 18 and a front portion 14 having a flange 16.

The hinges 11a-d are aligned with each other according to S, approximately at 1/5 length of the bottom from the discharge side.

As can be seen in figure 3 elongate rubber plates 27a-d -respectively- are attached to the lower side of the girders 21 of the bottoms 10a-c and also of the lid 9, by means of attachment plates 26a-d. The rubber plates 27a-d protrude sideward from the girders 21. At the sides of the deck in question support rods 25a-c have been attached between consecutive rails 20, here rails 20a and 20b, which support rods extend inclined for consecutive decks at different angles, which increase the higher the deck is situated. This is shown in figure 2. Behind the rods 25c rods 25d have been placed, for the lid 9. The rods 25a-d are situated in a vertical plane in which the rubber plates 27a-d are swivelled to the positions shown in figure 2.

For loading the container 1 from the loading side A, in case of a container in the situation shown in figure 1, the lid member 14 is first manually folded about the hinge 17, until it abuts the upper side of the lid member 18. Then the lid 9 at the location of a hinge 17 is engaged by hand and turned up in the direction C, rotating about hinge 11d. The lid is retained in the inclined position by cooperation of the rubber plates 27 attached to it with rods 25d, in the same manner is described below for bottom 10d.

Immediately after that the front wall 8d of deck 7d is engaged, and it is brought upwards, the bottom 10d also being turned upwards about hinge 11c. When the rubber plates 27 protruding on both sides of the bottom 10d arrive at the rods 25c, the rubber plates may slightly bend, in order to make passage of bottom 10d past the rods 25c possible. Immediately after that the rubber plate springs back into its old shape and it is capable of forming a support means for the bottom 10d on the rods 25c, analogous to what is shown in figure 3.

In the same manner the turning upwards of the bottom 10c and bottom 10b follows, until they are in the position shown in figure 2. The -relatively short- portions 13 of the bottoms 10 situated at the discharge side of the hinges 11a-c are thereby turned down, and the -relatively long- portions 12 of the bottoms situated at the loading side are hereby turned up. The latter portions are supported in the upwardly turned position by the rods 25a-c. In the position shown in figure 2 a slit for the fingers of a hand is left above the upper edges of the front walls 8b and 8c.

Now the loading of the container 1 may start, in which the poultry is placed on the deck 7a through the space bounded by the struts 30a, 30b, and upwardly bounded by the lower side of the bottom 10b. Because it was opted for to keep the front wall 8a of the deck in question permanent with the frame 2, instead of letting it move along with the bottom 10b, an ergonomic advantageous loading opening has been obtained.

After loading the deck 7a the front wall 8b is engaged and the bottom 10b is lowered again, the rubber plate 27a again bending for allowing passage past the rods 25a. Finally the bottom 10b is horizontal again, at the front supported on the upper edge of front wall 8a, and loading deck 7b can be started with. The bottom 10c of the deck situated above it remains in the position shown in figure 2. Once again an ergonomic advantageous loading opening has been realised.

Subsequently the bottom 10c is tilted back in the direction D, as is suggested in figure 2A, at the front supported on the upper edge of front wall 8b. Then deck 7c can be loaded, the same process is repeated for deck 7d, which at the front is supported on the upper edge of front wall 8c. After loading deck 7d the lid 9 is tilted back by engaging it with the hand at the location of hinge 17, into a horizontal position. Subsequently the flange 16 is engaged and it is turned back in the direction E, in order to thus also upwardly close off deck 7d. The loading is thus completed, and the container 1 can be transported to the location of destination.

The turning up and down of the bottoms and lid has taken place within the profile defined by the sides of the container.

## Claims

1. Container for transporting poultry, comprising a frame and a number of tray-shaped decks for the poultry, the container having a loading side, where the poultry can be placed on the decks, as well as an opposite rear side and lateral sides, whereby at least the decks above the lowermost deck have a bottom, which as a whole is hinged to the frame by means of a hinge connection or pivot connection situated at a distance from the rear side.

2. Container according to claim 1, the bottoms hinging like a rigid unity.

3. Container according to claim 1 or 2, the distance of hinge connection to the rear side of the frame being smaller than its distance to the loading side.

4. Container according to claim 3; the distance of the hinge connection to the rear side of the frame being in the order of magnitude of the height of the decks.

5. Container according to claim 3, the distance of the hinge connection to the rear side of the frame being smaller than the height of the decks.

6. Container according to any one of the preceding claims, the hinge connections for the bottom being vertically aligned.

7. Container according to any one of the preceding claims, the bottoms at the loading side being provided with front walls for shielding the deck at the loading side, the front walls being fixed to the respective bottoms.

8. Container according to any one of the preceding claims, the upper deck being covered by a lid, which as a whole is hinged to the frame by means of lid hinge connection or pivot connection situated at a distance from the rear side, the lid hinge connection being preferably vertically aligned with the other hinge connections.

9. Container according to claim 8, the lid at the loading side being provided with a portion that can be turned.

10. Container according to any one of the preceding claims, furthermore provided with means for retaining the bottoms and possibly the lid in an upwardly turned position, which retaining means comprise supports attached to the lateral sides of the frame.

11. Container according to claim 10, the retaining means comprising first and second retaining members cooperating with each other, which are provided on the frame and on the bottom or lid, respectively, wherein preferably the first retaining members each time extend in the swing path of the second retaining members and the second retaining members are adapted for snapping along the first retaining members during the tilting motion of the bottom or lid.

12. Container according to claim 10 or 11, the bottoms and -if present- the lid being provided with a stop for support on the support in question, wherein the stop is preferably situated at the side of the hinge connection of the respective bottom or lid facing the loading side.

13. Container according to claim 12 the stop being made of deformable material, that is sufficiently rigid for keeping the bottom in upwardly turned position when supported on the support, the stop being preferably made of rubber.

14. Container according to any one of the preceding claims, the rear side forming a discharge side.

15. Container according to any one of the preceding claims, the bottoms being provided with girders and transverse bars.

16. Container for transporting poultry, comprising a frame and a number of tray-shaped decks for the poultry, the container having a loading side, where the poultry can be placed on the decks, as well as an opposite rear side and lateral sides, whereby the decks are upwardly shielded by lid walls, such as the bottoms of the decks situated above it or an upper lid, the lid walls as a whole being hinged to the frame by means of hinge connections or pivot connections situated at a distance from the rear side.
